# EUROPEAN PATENT SPECIFICATION

(11) **EP 2 717 640 B1**
(45) Date of publication and mention of the grant of the patent: **08.05.2019**
(21) Application number: 12793411.5
(22) Date of filing: 23.03.2012
(51) Int. Cl.: H04W 72/12, H04W 88/08

(54) **CARRIER SCHEDULING METHOD, APPARATUS AND RELATED DEVICE**
TRÄGERPLANUNGSVERFAHREN UND -VORRICHTUNG SOWIE ZUGEHÖRIGE VORRICHTUNG
PROCÉDÉ ET APPAREIL DE PLANIFICATION DE PORTEUSES, ET DISPOSITIF ASSOCIÉ

(30) Priority: 30.05.2011 CN 201110142872
(43) Date of publication of application: 09.04.2014
(73) Proprietor: China Mobile Communications Corporation, Beijing 100032 (CN)
(72) Inventor: LI, Nan, Beijing 100032 (CN)
(74) Representative: Eisenführ Speiser
(86) International application number: PCT/CN2012/072869
(87) International publication number: WO 2012/163145

(56) References cited:
- EP-A1- 2 237 622
- WO-A1-2010/112066
- CN-A- 101 483 914
- CN-A- 101 588 629
- CN-A- 101 741 710
- CN-A- 101 925 155
- RENESAS MOBILE EUROPE: "Operation Principles of CC specific TDD Configuration", 3GPP DRAFT; R2-112938 OPERATION PRINCIPLES FOR CC SPECIFIC TDD CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 2 May 2011 (2011-05-02), XP050495150, [retrieved on 2011-05-02]
- NOKIA SIEMENS NETWORKS ET AL: "Cell specific TDD configuration with inter-band CA", 3GPP DRAFT; R2-112946 CELL SPECIFIC TDD CONFIGURATION WITH INTER-BAND CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495304, [retrieved on 2011-05-03]

## Description

### FIELD

The present disclosure relates to the technical field of mobile communication, and in particular to a method, apparatus and related device for carrier scheduling.

### BACKGROUND

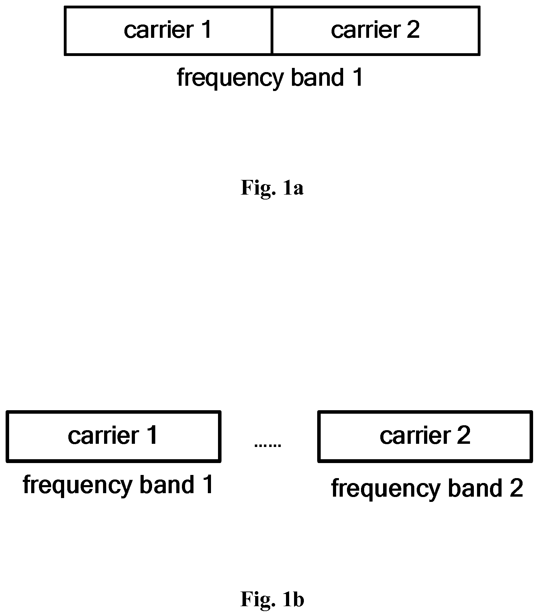

From LTE (Long Term Evolution) system to LTE-Advanced system, the evolution will be significantly affected by the requirement on wider spectrum. Therefore, the 3rd Generation Partnership Project (3GPP) proposes a carrier aggregation technology to be used as one of the key technologies of LTE-Advanced system. With the carrier aggregation technology, redundancy of the mobile communication network may be reduced and throughput efficiency of the mobile communication network may be improved. At present, there are mainly two situations for carrier aggregation, including intra-band contiguous carrier aggregation and inter-band non-contiguous carrier aggregation. Figure 1a and Figure 1b are schematic diagrams of intra-band contiguous carrier aggregation and inter-band non-contiguous carrier aggregation respectively.

In the inter-band non-contiguous carrier aggregation, network resource can be utilized more reasonably if different timeslot ratio of uplink and downlink is configured for different frequency band, therefore, requirements on different uplink service and downlink service can be met. For example, within one scheduling cycle, a base station may schedule two carriers of different bands for a mobile terminal simultaneously, with one carrier being used for uplink information transmission and the other carrier being used for downlink information transmission. However, for the mobile terminal, if the simultaneously scheduled two carriers in which information is transmitted in opposite directions belong to frequency band ranges that are closed to each other, the two carriers may interfere with each other, thereby resulting in a decreased communication quality of the mobile terminal or even drop call for a serious interference.
WO 2010/112066 A1 discloses an apparatus, comprising scheduling means configured to allocate one or more resource blocks to a channel in an uplink frequency band and/or a downlink frequency band according to a first telecommunication standard and the available frequency band for the uplink or downlink, respectively, wherein the scheduling means is additionally configured to take into account a limit of resource blocks to be allocated to the channel, and wherein the limit is at least one of an allowed resource block, a resource block to be avoided, a width of a range allowed resource blocks, a non-usage information of the channel, an upper allowed resource block, and a lower allowed resource block, an upper limit of the number of resource blocks, a lower limit of the number of resource bocks, and any reasonable combinations of the limits mentioned. EP 2 237 622A1 discloses a duplex operation in a cellular communication system. In the operation, a base station transmits a base station duplex capability message to the user equipment, where the base station may be a paired spectrum duplex mode using paired uplink and downlink frequency carriers or may be an unpaired spectrum duplex mode using a signal frequency carrier for uplink and downlink.

### SUMMARY

The invention relates to a method, device, another method and device as defined in the independent claims. Embodiments representing specific realisations of the invention are defined in the dependent claims.

A method, device and related equipment for carrier scheduling are provided by the disclosure, which are applied to an inter-band non-contiguous carrier aggregation, and by which mutual interference between carriers with opposite information transmission directions is avoided and the communication quality of the mobile terminal is guaranteed.

A method for carrier scheduling is provided according to of the disclosure, including:
determining, by a base station, an uplink target carrier and a downlink target carrier for a mobile terminal, where the uplink target carrier is adapted to transmit uplink information and the down link target carrier is adapted to transmit downlink information; and
scheduling, by the base station, the uplink carrier and/or the downlink carrier for the mobile terminal in different time domains based on a predetermined anti-interference scheduling strategy, after judging that the mobile terminal does not support simultaneous information transmissions in opposite directions on the uplink carrier and the downlink carrier according to capability information about whether the mobile terminal supports simultaneous information transmissions in opposite directions on at least two frequency bands included in each frequency band combination for non-contiguous carrier aggregation supported by the mobile terminal itself.

A device for carrier scheduling is provided according to the disclosure, including:
a determining unit, adapted to determine an uplink target carrier and a downlink target carrier for a mobile terminal, where the uplink target carrier is adapted to transmit uplink information and the down link target carrier is adapted to transmit downlink information; and
a scheduling unit, adapted to schedule the uplink carrier and/or the downlink carrier for the mobile terminal in different time domains based on a predetermined anti-interference scheduling strategy, after judging that the mobile terminal does not support simultaneous information transmissions in opposite directions on the uplink carrier and the downlink carrier according to capability information about whether the mobile terminal supports simultaneous information transmissions in opposite directions on at least two frequency bands included in each frequency band combination for non-contiguous carrier aggregation supported by the mobile terminal itself.

A base station which includes the above device for carrier scheduling is provided according to the disclosure.

A method for reporting capability information is provided according to the disclosure, including:
reporting, by a mobile terminal, the capability information about whether the mobile terminal supports simultaneous information transmissions in opposite directions on at least two frequency bands included in each frequency band combination for non-contiguous carrier aggregation supported by the mobile terminal itself, to a base station, so that the base station schedules an uplink carrier and/or a downlink carrier for the mobile terminal in different time domains based on a predetermined anti-interference scheduling strategy after determining the uplink target carrier and the downlink target carrier for the mobile terminal and after judging that the mobile terminal does not support simultaneous information transmissions in opposite directions on the uplink carrier and the downlink carrier according to the capability information, wherein the uplink target carrier is adapted to transmit uplink information and the down link target carrier is adapted to transmit downlink information.

A device for reporting capability information according to the disclosure, including:
a reporting unit, adapted to report, to a base station, the capability information about whether the device supports simultaneous information transmissions in opposite directions on at least two frequency bands included in each frequency band combination for non-contiguous carrier aggregation supported by the device, so that the base station schedules an uplink carrier and/or a downlink carrier for the mobile terminal in different time domains based on a predetermined anti-interference scheduling strategy after determining the uplink target carrier and the downlink target carrier for the mobile terminal and after judging that the mobile terminal does not support simultaneous information transmissions in opposite directions on the uplink carrier and the downlink carrier according to the capability information, wherein the uplink target carrier is adapted to transmit uplink information and the down link target carrier is adapted to transmit downlink information.

A mobile terminal which includes the above device for reporting capability information is provided according to the disclosure.

In the technical solution provided by the embodiments of the disclosure, the base station determines an uplink target carrier and a downlink target carrier to be scheduled for the mobile terminal, where the uplink target carrier is adapted to transmit uplink information and the downlink carriers is adapted to transmit downlink information; and the base station schedules the determined uplink target carrier and downlink target carrier for the mobile terminal in different time domains if it is judged that the mobile terminal does not support simultaneous information transmissions in opposite directions on the determined uplink and downlink target carriers. By this technical solution, the problem in the prior art that the base station directly schedules two carriers with opposite information transmission directions for the mobile terminal without analysis is avoided. In this technical solution, if it is judged that the mobile terminal does not support simultaneous information transmissions in opposite directions before scheduling two carriers with opposite information transmission directions for the mobile terminal, the base station may schedule the determined two carriers for the mobile terminal in different time domain resources to transmit uplink and downlink information respectively, thereby avoiding mutual interference between the scheduled two carriers and improving the communication quality of the mobile terminal.

The other features and advantages of the disclosure are described below, and become obvious from the disclosure or be known by implementing the disclosure. The objects and other advantages may be realized and obtained by the structure specified in the specification, claims and drawings.

### BRIEF DESCRIPTION OF THE DRAWINGS

Figure 1a is a schematic diagram of intra-band contiguous carrier aggregation in the prior art;
Figure 1b is a schematic diagram of inter-band non-contiguous carrier aggregation in the prior art;
Figure 2 is a flowchart of a method for carrier scheduling provided by an embodiment of the disclosure;
Figure 3 is a flowchart of determining and scheduling a target carrier for a mobile terminal by a base station provided by an embodiment of the disclosure;
Figure 4 is a schematic diagram of timeslot ratios of uplink and downlink of carriers available by a base station provided by an embodiment of the disclosure;
Figure 5 is a possible structural schematic diagram of a device for carrier scheduling provided by an embodiment of the disclosure;
Figure 6 is a flowchart of a method for reporting capability information provided by an embodiment of the disclosure; and
Figure 7 is a possible structural schematic diagram of a device for reporting capability information provided by an embodiment of the disclosure.

### DETAILED DESCRIPTION

For inter-band non-contiguous carrier aggregation, by configuring different timeslot ratios of uplink and downlink for two carriers, i.e., information transmission directions in the two carriers scheduled for a mobile terminal within one scheduling cycle are different, the requirements on uplink and downlink data transmission rates may be satisfied more flexibly. However, if the two carriers of different frequency bands are configured with different timeslot ratios of uplink and downlink and the frequency bands of the two carriers are closed to each other, mutual interference between the two carriers may occur, thereby resulting in the decreased communication quality for the base station and the mobile terminal. At present, the mutual interference between the two carriers may be prevented by utilizing radio frequency filtering to attenuate carrier a of frequency band A and carrier b of frequency band B to some degree. For the base station, taking sensitivity loss of the base station receiver of 0.8dB as evaluative criteria, in order to ensure that there is no mutual interference between carrier a of frequency band A and carrier b of frequency band B, the required attenuation is 74dB (provided that the base station bandwidth is 20MHZ, the transmission power is 46dBm, the noise coefficient of the base station receiver is 5dB, the adjacent frequency leakage ratio is 45dB, the receiver noise power is -109dBm/MHz and the minimum coupling loss between base station antennas is 30dB, so the required attenuation is 46-45 -(- 174+ 10*log 18+60+5 -7)-30=74dB). The requirement on attenuation may be satisfied by adopting cavity or dielectric filtering if frequency band A is far enough from frequency band B. For the mobile terminal, taking the mobile terminal receiver loss of 3dB as evaluative criteria, in order to ensure that there is no mutual interference between carrier a of frequency band A and carrier b of frequency band B, the required attenuation is 73dB (provided that the bandwidth is 20MHZ, the transmission power is 23dBm, the receiver noise coefficient is 9dB, the adjacent frequency leakage ratio is 30dB and the minimum coupling loss between two mobile terminal antennas is 12dB, so the required attenuation is 23-13- (-174+60+9) -30-12=73dB). The mobile terminal adopts the common SAW (Surface Acoustic Wave) filter, and the attenuation besides frequency band of 20MHz is only about 30-40dB. Therefore, if different timeslot ratios of the uplink and downlink are configured for two carriers of different frequency bands for the mobile terminal, the mutual interference between the two carriers can not be avoided by radio frequency filtering, thus the communication quality of the mobile terminal can not be guaranteed.

If the base station can learn the capability information about whether the mobile terminal supports simultaneous information transmissions in opposite directions on the frequency bands of the two carriers scheduled for the mobile terminal for the uplink and downlink information transmissions respectively, a specific scheduling strategy may be adopted to avoid the mutual interference between the two carriers scheduled for the mobile terminal simultaneously and the interference on the communication quality of the mobile terminal. If the difference between the frequency bands of the carriers for the uplink and downlink information transmission is greater than a specified threshold value, it can be confirmed that the mobile terminal supports simultaneous information transmissions in opposite directions on the two determined carriers; otherwise, it can be confirmed that the mobile terminal does not support simultaneous information transmissions in opposite directions on the two determined carriers.

In view of this, a method, a device and related equipment for carrier scheduling are provided by the embodiments of the disclosure, which are applied to inter-band non-contiguous carrier aggregation, and by which the mutual interference between two carriers with opposite information transmission directions is avoided and the communication quality of the mobile terminal is guaranteed.

The method, device and the related equipment for carrier scheduling provided by the embodiments of the disclosure may be applied to TDD (Time division duplex) LTE system and FDD (Frequency division duplex) LTE system.

The preferable embodiments of the disclosure may be described below in conjunction with the drawings. The embodiments of the disclosure are only used to describe and explain the disclosure, but not used to limit the disclosure. The embodiments of the disclosure and the features in the embodiments may be combined if there is no conflict.

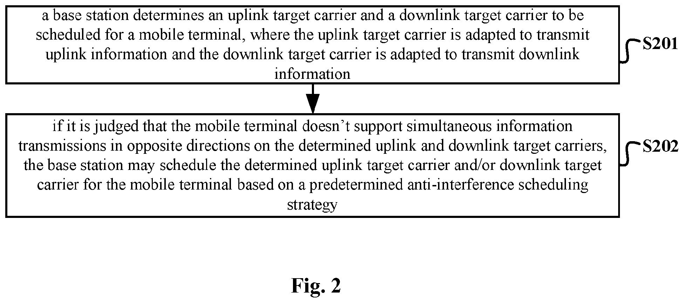

As shown in Figure 2, a method for carrier scheduling provided by an embodiment of the disclosure includes:
S201: a base station determines an uplink target carrier and a downlink target carrier to be scheduled for a mobile terminal, where the uplink target carrier is adapted to transmit uplink information and the downlink target carrier is adapted to transmit downlink information; and
S202: the base station schedules the determined uplink target carrier and/or downlink target carrier for the mobile terminal based on a predetermined anti-interference scheduling strategy after judging that the mobile terminal doesn't support simultaneous information transmissions in opposite directions on the determined uplink and downlink target carriers.

The base station may judge that the mobile terminal doesn't support simultaneous information transmissions in opposite directions on the determined uplink and downlink target carriers in two manners.

### First manner

The base station receives capability information about whether the mobile terminal supports simultaneous information transmissions in opposite directions on frequency bands of the determined uplink and downlink target carriers which is reported by the mobile terminal. If the base station confirms, based on the received capability information of the mobile terminal, that the mobile terminal doesn't support simultaneous information transmissions in opposite directions on the frequency bands of the determined uplink and downlink target carriers, the base station judges that the mobile terminal doesn't support simultaneous information transmissions in opposite directions on the determined uplink and downlink target carriers.

### Second manner

The base station reads, from information prestored in the base station itself, capability information about whether the mobile terminal supports simultaneous information transmissions in opposite directions on frequency bands of the determined uplink and downlink target carriers. If the base station confirms, based on the read capability information of the mobile terminal, that the mobile terminal doesn't support simultaneous information transmissions in opposite directions on the frequency bands of the determined uplink and downlink target carriers, the base station judges that the mobile terminal doesn't support simultaneous information transmissions in opposite directions on the determined uplink and downlink target carriers.

In this manner, the base station may prestore capability information about whether the mobile terminal supports simultaneous information transmissions in opposite directions on any sub frequency band combination included in the frequency band combination for non-contiguous carrier aggregation supported by both the base station and the mobile terminal. Provided that three carriers are included in a certain frequency band combination for non-contiguous carrier aggregation supported by both the base station and the mobile terminal, and each frequency band may support a carrier, so there are three available carriers including carrier 1 of frequency band 1, carrier 2 of frequency band 2 and carrier 3 of frequency band 3. For the sub frequency band combinations among the frequency bands included in the frequency band combination for non-contiguous carrier aggregation supported by both the mobile terminal and the base station (in this embodiment, four sub frequency band combinations are included: a combination of frequency band 1 and frequency band 2, a combination of frequency band 1 and frequency band 3, a combination of frequency band 2 and frequency band 3, and a combination of frequency band 1, frequency band 2 and frequency band 3), provided that the mobile terminal supports simultaneous information transmissions in opposite directions on frequency band 2 and frequency band 3, and doesn't support simultaneous information transmissions in opposite directions on frequency band 1 and frequency band 3 and on frequency band 1 and frequency band 2, then the mobile terminal doesn't support simultaneous information transmissions in opposite directions on frequency band 1, frequency band 2 and frequency band 3. In this embodiment of the disclosure, the base station may store capability information about whether the mobile terminal supports simultaneous information transmissions in opposite directions in each sub frequency band combinations in a form. An identifier bit may be set in the form, the identifier bit of "1" indicates that the mobile terminal supports simultaneous information transmissions in opposite directions on the sub frequency band combination; and the identifier bit is "0" indicates that the mobile terminal doesn't support simultaneous information transmissions in opposite directions on the sub frequency band combination. A possible form structure stored in the base station is shown as follows:

| sub frequency band combination | identifier bit |
|---|---|
| frequency band 1 and frequency band 2 | 0 |
| frequency band 1 and frequency band 3 | 1 |
| frequency band 2 and frequency band 3 | 1 |
| frequency band 1, frequency band 2 and frequency band 3 | 0 |

In an implementation, since radio frequency capabilities of different mobile terminals are substantively the same, the capability information for different mobile terminals about whether the different mobile terminals support simultaneous information transmissions in opposite directions on the frequency bands may be regarded as the same.

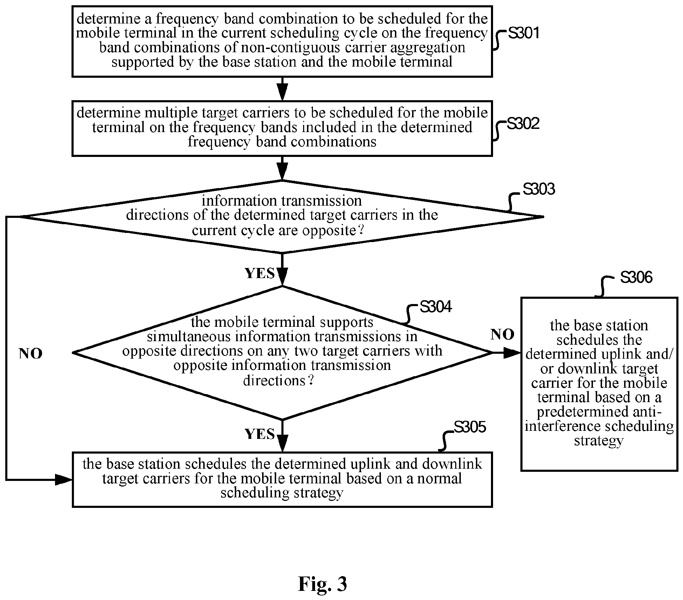

Figure 3 is a flowchart of determining target carriers and scheduling the target carriers for the mobile terminal by the base station according to an embodiment of the disclosure.

Step S301: determining, from frequency band combinations for non-contiguous carrier aggregation supported by the base station and the mobile terminal, a frequency band combination to be scheduled for the mobile terminal in the current scheduling cycle.

Step S302: determining multiple target carriers to be scheduled for the mobile terminal in the frequency bands included in the determined frequency band combination.

The target carriers may be target carriers with same information transmission direction, or the target carriers may include uplink target carriers adapted to transmit uplink information and downlink target carriers adapted to transmit downlink information.

Step S303: judging whether the information is transmitted in the opposite directions on the multiple target carriers determined in Step S302 in the current cycle, performing Step S304 if the information is transmitted in the opposite directions, and performing Step S305 if the information is not transmitted in the opposite directions.

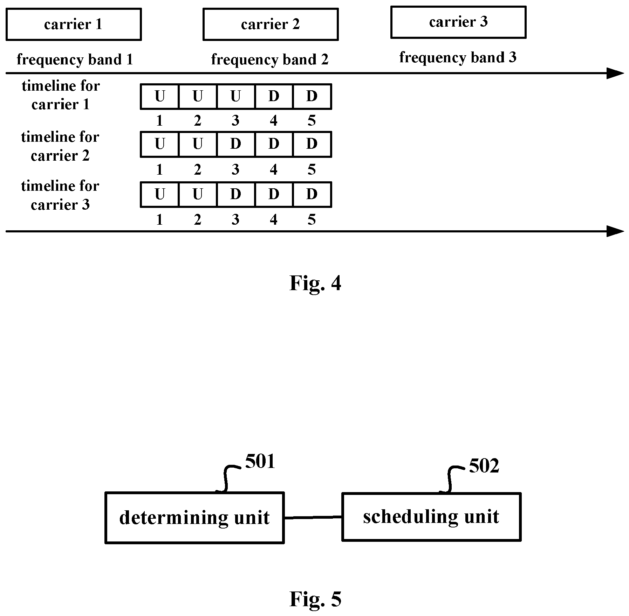

Figure 4 is a schematic diagram of timeslot ratios of uplink and downlink of the available carriers of the base station. Provided that the base station supports the non-contiguous carrier aggregation in frequency band 1, frequency band 2 and frequency band 3; carrier 1 is in frequency band 1, carrier 2 is in frequency band 2 and carrier 3 is in frequency band 3; the distance between frequency band 1 and frequency band 3 is larger than a predetermined threshold value, and frequency band 1 is closed to frequency band 2; timeslot configurations of carrier 1 and carrier 2 are different, and timeslot configurations of carrier 2 and carrier 3 are the same, where "U" presents uplink information transmission, and "D" presents downlink information transmission.

Step S304: judging whether the mobile terminal supports simultaneous information transmissions in opposite directions on any two target carriers with opposite information transmission directions, performing Step S305 if the mobile terminal supports simultaneous information transmissions in opposite directions on any two target carriers with opposite information transmission directions, and performing Step S306 if the mobile terminal doesn't support simultaneous information transmissions in opposite directions on any two target carriers with opposite information transmission directions.

Step S305: the base station schedules the determined uplink and downlink target carriers for the mobile terminal based on a normal scheduling strategy.

The base station may schedule the determined uplink and downlink target carriers for the mobile terminal in the same time domain simultaneously.

Step S306: the base station schedules the determined uplink target carrier and/or downlink target carrier for the mobile terminal based on a predetermined anti-interference scheduling strategy.

The base station may schedule the determined uplink target carrier and downlink target carrier for the mobile terminal based on a predetermined anti-interference scheduling strategy, which may includes:
the base station determines priorities of the uplink and downlink target carriers based on the uplink information to be transmitted on the uplink target carrier and the downlink information to be transmitted on the downlink target carrier; and
the base station schedules the uplink and downlink target carriers for the mobile terminal in different time domains based on the determined priorities of the uplink and downlink target carriers.

As shown in Figure 4, for example, the current time is 3 in the timeline, and the base station prepares to schedule carrier 1, carrier 2 and carrier 3 for the mobile terminal simultaneously, where carrier 1 is adapted to transmit uplink information, carrier 2 and carrier 3 are adapted to transmit downlink information. Because the mobile terminal doesn't support simultaneous information transmissions in opposite directions on carrier 1 and carrier 2 and on carrier 1 and carrier 3, in order to avoid mutual interference generated when scheduling carrier 1 and carrier 2 or carrier 1 and carrier 3 for the mobile terminal simultaneously, the base station may determine the priority of each carrier based on the importance of the uplink information or downlink information to be transmitted on the carrier. Provided that the dedicated physical control channel, which includes important information such as resource scheduling information (uplink resource allocation information (UL grant)), downlink resource allocation information (DL Grant)), modulation coding scheme (MCS) and power control information, is to be downlink-transmitted in carrier 2 and carrier 3 to the mobile terminal; and common physical uplink shared channel information is uplink-transmitted in carrier 1, it is determined that the priorities of carrier 2 and carrier 3 are higher than the priority of carrier 1. In order to avoid the interference of carrier 1 to carrier 2 and carrier 3, the base station may, in the current scheduling cycle, schedule carrier 2 and carrier 3 with high priorities for the mobile terminal firstly, and then schedule carrier 1 with low priority for the mobile terminal.

In an implementation, the base station scheduling the determined uplink and downlink target carriers for the mobile terminal based on a predetermined anti-interference scheduling strategy may includes:
dividing the current scheduling cycle into two phases; and
scheduling the uplink target carrier for the mobile terminal in one phase; and scheduling the downlink target carrier for the mobile terminal in the other phase.

As shown in Figure 4, for example, the current time is 3 in the timeline, and the base station prepares to schedule carrier 1, carrier 2 and carrier 3 for the mobile terminal simultaneously, where carrier 1 is adapted to transmit uplink information, and carrier 2 and carrier 3 are adapted to transmit downlink information. Because the mobile terminal doesn't support simultaneous information transmissions in opposite directions on carrier 1 and carrier 2 and on carrier 1 and carrier 3, in order to avoid mutual interference generated when scheduling carrier 1 and carrier 2 or carrier 1 and carrier 3 for the mobile terminal simultaneously, in a case that the current scheduling cycle includes 14 OFDM (Orthogonal Frequency Division Multiplexing) symbols, the base station may schedule carrier 2 and carrier 3 for the mobile terminal for downlink transmission from the first three OFDM symbols, and schedule carrier 1 for the mobile terminal from the other 11 OFDM symbols, thereby avoiding the interference generated in the process of scheduling the carriers with opposite information transmission directions for the mobile terminal simultaneously.

In an implementation, the base station scheduling the determined uplink target carrier or downlink target carrier for the mobile terminal based on a predetermined anti-interference scheduling strategy may includes:
the base station determines the priorities of the uplink and downlink target carriers based on the uplink information to be transmitted on the uplink target carrier and the downlink information to be transmitted on the downlink target carrier;
the base station schedules the uplink target carrier for the mobile terminal if the determined priority of the uplink target carrier is higher than the determined priority of the downlink target carrier; and
the base station schedules the downlink target carrier for the mobile terminal if the determined priority of the downlink target carrier is higher than the determined priority of the uplink target carrier.

For example, the base station prepares to schedule carrier 1, carrier 2 and carrier 3 for the mobile terminal simultaneously, where carrier 1 is adapted to transmit uplink information, and carrier 2 and carrier 3 are adapted to transmit downlink information. Because the mobile terminal doesn't support simultaneous information transmissions in opposite directions on carrier 1 and carrier 2 and on carrier 1 and carrier 3, the base station schedules carrier 2 and carrier 3 with high priorities for the mobile terminal but does not schedule carrier 1 with low priority for the mobile terminal if the base station determines that the priorities of carrier 2 and carrier 3 are higher than the priority of carrier 1 based on the importance of the information transmitted on each carrier; and the base station schedules carrier 1 with high priority for the mobile terminal but does not schedule carrier 2 and carrier 3 with low priorities for the mobile terminal if the base station determines that the priority of carrier 1 is higher than the priorities of carrier 2 and carrier 3 based on the importance of the information transmitted on each carrier. That is, the base station only schedules the carrier with high priority for the mobile terminal but does not schedule the carrier with low priority for the mobile terminal.

It can be understood that if the mobile terminal doesn't support simultaneous information transmissions in opposite directions on any two target carriers with opposite information transmission directions, the base station may re-determine the frequency band combination to be scheduled for the mobile terminal in the frequency band combinations for carrier aggregation supported by the base station and the mobile terminal.

In the technical solution provided by the embodiments of the disclosure, after the base station determines multiple target carriers to be scheduled for the mobile terminal, where the target carriers include uplink target carriers adapted to transmit uplink information and downlink target carriers adapted to transmit downlink information, the base station schedules the determined uplink and downlink target carriers for the mobile terminal in different time domains if it is judged that the mobile terminal doesn't support simultaneous information transmissions in opposite directions on the determined uplink and downlink target carriers. If the difference between the frequency bands of uplink and downlink carriers is not greater than a specified threshold value, the mobile terminal does not support simultaneous information transmissions in opposite directions on the determined uplink and downlink target carriers. With this technical solution, it is avoided the case in the prior art that the base station directly schedules two carriers with opposite information transmission directions for the mobile terminal without analysis, which will cause mutual interference between the two carriers if the frequency bands of the scheduled two carriers are closed to each other. In this technical solution, before scheduling the two carriers with opposite information transmission directions for the mobile terminal, the distance between the frequency bands of the two carriers to be scheduled is analyzed, and if the distance between the frequency bands of the two carriers is larger than a specified threshold value, which indicates that the distance between the frequency bands of the two carriers to be scheduled is large enough to avoid the interference generated when transmitting information in opposite directions, the mobile terminal supports simultaneous information transmissions in opposite directions on the two carriers to be scheduled; otherwise, the mobile terminal does not support simultaneous information transmissions in opposite directions on the two carriers to be scheduled. If the mobile terminal doesn't support simultaneous information transmissions in opposite directions on the two carriers to be scheduled, the base station schedules the determined two carriers for the mobile terminal in different time domain resources, for uplink information and downlink information transmission respectively, thereby avoiding mutual interference between the two scheduled carriers and improving the communication quality of the mobile terminal.

Based on the same invention concept, a device for carrier scheduling, a based station, a method and device for reporting capability information, and a mobile terminal are further provided by embodiments of the disclosure. The solution principles of the method for reporting capability information, the device for carrier scheduling and the related equipments are similar to the method for carrier scheduling, and repeated descriptions thereof are omitted herein.

Figure 5 is a possible structure diagram of the device for carrier scheduling provided by an embodiment of the disclosure, including:
a determining unit 501 adapted to determine an uplink target carrier and a downlink target carrier to be scheduled for a mobile terminal, where the uplink target carrier is adapted to transmit uplink information and the downlink target carrier is adapted to transmit downlink information, and
a scheduling unit 502 adapted to schedule the determined uplink target carrier and/or downlink target carrier for the mobile terminal based on a predetermined anti-interference scheduling strategy if it is judged that the mobile terminal doesn't support simultaneous information transmissions in opposite directions on the determined uplink and downlink target carriers.

In an implementation, the scheduling unit 502 includes:
a receiving sub-unit adapted to receive capability information about whether the mobile terminal supports simultaneous information transmissions in opposite directions on frequency bands of the determined uplink and downlink target carriers which is reported by the mobile terminal; and
a first judging sub-unit adapted to judge that the mobile terminal doesn't support simultaneous information transmissions in opposite directions on the determined uplink and downlink target carriers if it is confirmed that the mobile terminal doesn't support simultaneous information transmissions in opposite directions on frequency bands of the determined uplink and downlink target carriers based on the capability information of the mobile terminal received by the receiving sub-unit.

In an implementation, the scheduling unit 502 includes:
a reading sub-unit adapted to read from the prestored information the capability information about whether the mobile terminal supports simultaneous information transmissions in opposite directions on frequency bands of the determined uplink and downlink target carriers; and
a second judging sub-unit adapted to judge that the mobile terminal doesn't support simultaneous information transmissions in opposite directions on the determined uplink and downlink target carriers if it is confirmed that the mobile terminal doesn't support simultaneous information transmissions in opposite directions on the frequency bands of the determined uplink and downlink target carriers based on the capability information of the mobile terminal read by the reading sub-unit.

In an implementation, the scheduling unit 502 may include:
a first determining sub-unit adapted to determine priorities of the uplink and downlink target carriers based on the uplink information to be transmitted on the uplink target carrier and the downlink information to be transmitted on the downlink target carrier; and
a first scheduling sub-unit adapted to schedule the determined uplink and downlink target carriers for the mobile terminal in different time domains based on the determined priorities of the uplink and downlink target carriers.

In an implementation, the scheduling unit 502 may include:
a dividing sub-unit adapted to divide the current scheduling cycle into two phases; and
a second scheduling sub-unit adapted to schedule the uplink target carrier for the mobile terminal in one phase; and to schedule the downlink target carrier for the mobile terminal in the other phase.

In an implementation, the scheduling unit 502 may include:
a second determining sub-unit adapted to determine priorities of the uplink and downlink target carriers based on the uplink information to be transmitted on the uplink target carrier and the downlink information to be transmitted on the downlink target carrier;
a third scheduling sub-unit adapted to schedule the uplink target carrier for the mobile terminal if the determined priority of the uplink target carrier is higher than the determined priority of the downlink target carrier; and
a fourth scheduling sub-unit adapted to schedule the downlink target carrier for the mobile terminal if the determined priority of the downlink target carrier is higher than the determined priority of the uplink target carrier.

In an implementation, the scheduling unit 502 is further adapted to schedule simultaneously the determined uplink and downlink target carriers for the mobile terminal in the same time domain if it is confirmed that the mobile terminal supports simultaneous information transmissions in opposite directions on the determined uplink and downlink target carriers.

For convenience of description, the parts of the above device for carrier scheduling, which are divided into modules (or units) according to their functions, are described respectively. However, the functions of each module (or unit) may be implemented in one or multiple software or hardware in an implementation. In the embodiments of the disclosure, the device for carrier scheduling is generally installed in a base station.

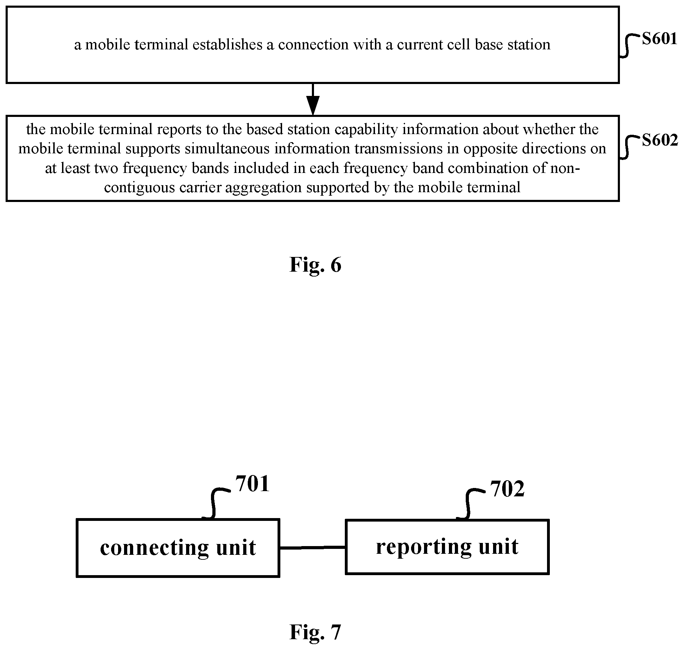

In addition, as shown in Figure 6, a method for reporting capability information is further provided by an embodiment of the disclosure, including:
Step S601: a mobile terminal establishes a connection with the current cell base station; and
Step S602: the mobile terminal reports, to the base station, the capability information about whether the mobile terminal supports simultaneous information transmissions in opposite directions on at least two frequency bands included in each frequency band combination for non-contiguous carrier aggregation supported by the mobile terminal.

In an implementation, after the mobile terminal establishes a connection with the local cell base station or establishes a connection with a target cell base station after a inter-cell handover, User Equipment Capability Information, which carriers the capability information about whether the mobile terminal supports simultaneous information transmissions in opposite directions on at least two frequency bands included in each frequency band combinations for non-contiguous carrier aggregation supported by the mobile terminal, may be reported to the base station. For LTE system, the information may be defined in UE-EUTRA-Capability Information Element. In an embodiment of the disclosure, a list of frequency band combinations for carrier aggregation supported by the mobile terminal may be defined in UE-EUTRA-Capability Information Element, and whether the mobile terminal supports simultaneous information transmissions in opposite directions on certain frequency bands is represented in the list of frequency band combinations as follows. For example, the mobile terminal supports non-contiguous carrier aggregation in frequency band 1, frequency band 2 and frequency band 3, and an identifier bit may be defined in UE-EUTRA-Capability Information Element to indicate whether the mobile terminal supports simultaneous information transmissions in opposite directions on the three frequency bands. Identifier bit of "1" indicates that the mobile terminal supports simultaneous information transmissions in opposite directions on the three frequency bands; and identifier bit of "0" indicates that the mobile terminal doesn't support simultaneous information transmissions in opposite directions on the three frequency bands. If the mobile terminal doesn't support simultaneous information transmissions in opposite directions on the three frequency bands, a capability information reporting mode of enumerated type may be defined, that is, a field of one bit is defined to indicate whether the mobile terminal supports simultaneous information transmissions in opposite directions on the sub frequency band combinations included in the frequency band combination. Similarly, the filed value of 1 indicates that the mobile terminal supports simultaneous information transmissions in opposite directions on the corresponding sub frequency band combination; and the filed value of 0 indicates that the mobile terminal doesn't support simultaneous information transmissions in opposite directions on the corresponding sub frequency band combination. For example, the mobile terminal supports simultaneous information transmissions in opposite directions on frequency band 1 and frequency band 2 and on frequency band 1 and frequency band 3, and doesn't support simultaneous information transmissions in opposite directions on frequency band 2 and frequency band 3, the list of the frequency band combinations defined in UE-EUTRA-Capability Information Element is shown as follows:

| frequency band combination | sub frequency band combinations | field value |
|---|---|---|
| frequency band 1, frequency band 2, frequency band3 | frequency band 1 and frequency band 2 | 1 |
| | frequency band 1 and frequency band3 | 1 |
| | frequency band 2 and frequency band3 | 0 |

In an implementation, the method for reporting capability information may further includes:
receiving identifier information of the uplink target carrier and downlink target carrier to be scheduled for the mobile terminal which is sent from the based station; and
reporting, to the base station, the capability information about whether the mobile terminal supports simultaneous information transmissions in opposite directions on the frequency bands of the corresponding uplink target carrier and downlink target carrier based on the received identifier information of the uplink target carrier and downlink target carrier.

As shown in Figure 7, a device for reporting capability information is provided by an embodiment of the disclosure, including:
a connecting unit 701 adapted to establish a connection with the current cell base station; and
a reporting unit 702 adapted to report to the base station the capability information about whether the device supports simultaneous information transmissions in opposite directions on at least two frequency bands included in each frequency band combination for non-contiguous carrier aggregation supported by the device.

In an implementation, the device for reporting capability information may further include a receiving unit, where
the receiving unit is adapted to receive the identifier information of the uplink target carrier and downlink target carrier to be scheduled for the mobile terminal sent by the base station after the device establishes a connection with the current cell base station; and
the reporting unit 702 is further adapted to report to the base station the capability information about whether the device supports simultaneous information transmissions in opposite directions on the frequency bands of the corresponding uplink target carrier and downlink target carrier based on the received identifier information of uplink target carrier and downlink target carrier.

In an implementation, the above device for reporting capability information is generally installed in a mobile terminal.

The skilled in the art may understand that the embodiments of the disclosure may be implemented as a method, a system or a computer program product. Therefore, the disclosure may be embodied by hardware entirely, by software entirely or by combination of software and hardware. In addition, the disclosure may be embodied by the computer program product which can be implemented in one or more computer readable storage medium (for example, disk storage, CD-ROM, optical storage) including computer readable program codes.

The disclosure is described according to the flowcharts and/or block diagrams of the methods, devices (systems) and computer program products provided by the embodiments of the disclosure. It should be understood that each process and/or block and the combination of processes and/or the combination of blocks in the flowcharts and/or block diagrams may be implemented by computer program instructions. The computer program instructions may be provided to a general-purpose computer, a dedicated computer, an embedded processor or a processor of other programmable data processing device to generate a machine, in order that a device adapted to realize the functions specified in one or more processes in the flowcharts and/or one or more blocks in the block diagrams may be generated by instructions executed by the computer or the processor of other programmable data processing device.

These computer program instructions may further be stored in a computer-readable memory which can guide the computer or other programmable data processing device to operate in a specific way, and the instructions stored in the computer-readable memory may produce an article which includes instruction device, and the instruction device is adapted to realize the functions specified in one or more processes in the flowcharts and/or one or more blocks in the block diagrams.

These computer program instructions may further be loaded to a computer or other programmable data processing device, and processes realized by the computer may be implemented by executing a series of operating steps on the computer or other programmable device, thus the instructions executed on the computer or other programmable device provide steps for realizing the functions specified in one or more processes in the flowcharts and/or one or more blocks in the block diagrams.

In the method, device and related equipment for carrier scheduling provided by the embodiments of the disclosure, a mobile terminal reports to a base station its capability information about whether the mobile terminal supports simultaneous information transmissions in opposite directions on the two carriers of different frequency bands, thus the base station may schedule the target carriers for the mobile terminal based on the capability information reported by the mobile terminal, thereby avoiding mutual interference between the two carriers in which information is transmitted in opposite directions and ensuring the communication quality of the mobile terminal.

Although the preferable embodiments of the disclosure are described, those skilled in the art may make additional changes and modifications to the embodiments after they learn the basic creativity concept. Therefore, the attached claims are to be explained as including the preferable embodiments and all changes and modifications which fall into the protection scope of the claims.

Obviously, various changes and modifications can be made on the disclosure by those skilled in the art without departing from the scope of the claims. Hence the disclosure also intends to include such changes and modifications in the scope of protection if the changes and modifications fall within the scope of the claims.

## Claims

1. A method for carrier scheduling, comprising:
determining (201), by a base station, an uplink carrier and a downlink carrier for a mobile terminal, wherein the uplink carrier is adapted to transmit uplink information and the downlink carrier is adapted to transmit downlink information;
**characterized in that** the method further comprises:
scheduling (S202), by the base station, the uplink carrier and/or the downlink carrier for the mobile terminal in different time domains based on a predetermined anti-interference scheduling strategy after judging that the mobile terminal does not support simultaneous information transmissions in opposite directions on the uplink carrier and the downlink carrier according to capability information about whether the mobile terminal supports simultaneous information transmissions in opposite directions on at least two frequency bands included in each frequency band combination for non-contiguous carrier aggregation supported by the mobile terminal itself.

2. The method according to claim 1, wherein judging that the mobile terminal does not support simultaneous information transmissions in opposite directions on the uplink carrier and the downlink carrier comprises:
receiving, the capability information about whether the mobile terminal supports simultaneous information transmissions in opposite directions on frequency bands of the uplink carrier and the downlink carrier, which is reported by the mobile terminal, and judging that the mobile terminal does not support simultaneous information transmissions in opposite directions on the uplink carrier and the downlink carrier if it is confirmed that the mobile terminal does not support simultaneous information transmissions in opposite directions on the frequency bands of the uplink carrier and the downlink carrier based on the received capability information of the mobile terminal; or
reading, by the base station, from information prestored in the base station itself, the capability information about whether the mobile terminal supports simultaneous information transmissions in opposite directions on frequency bands of the uplink carrier and the downlink carrier, and judging that the mobile terminal does not support simultaneous information transmissions in opposite directions on the uplink carrier and the downlink carrier if it is confirmed that the mobile terminal does not support simultaneous information transmissions in opposite directions on the frequency bands of the uplink carrier and the downlink carrier based on the read capability information of the mobile terminal.

3. The method according to claim 1, wherein, the scheduling, by the base station, the uplink carrier and the downlink carrier for the mobile terminal based on the predetermined anti-interference scheduling strategy comprises:
determining, by the base station, priorities of the uplink carrier and downlink carrier based on uplink information to be transmitted on the uplink carrier and downlink information to be transmitted on the downlink carrier; and
scheduling the uplink carrier and the downlink carrier for the mobile terminal in the different time domains based on the determined priorities of the uplink carrier and downlink carrier; or,
the scheduling, by a base station, the uplink carrier and the downlink carrier for the mobile terminal based on the predetermined anti-interference scheduling strategy comprises:
dividing a current scheduling cycle into two phases; and
scheduling the uplink carrier for the mobile terminal in one phase of the two phases; and scheduling the downlink carrier for the mobile terminal in the other phase of the two phases;
or,
the scheduling, by the base station, the uplink carrier or the downlink carrier for the mobile terminal based on the predetermined anti-interference scheduling strategy comprises:
determining, by the base station, priorities of the uplink carrier and downlink carrier based on uplink information to be transmitted on the uplink carrier and downlink information to be transmitted on the downlink carrier;
scheduling, by the based station, the uplink carrier for the mobile terminal if the determined priority of the uplink carrier is higher than the determined priority of the downlink carrier; and
scheduling, by the based station, the downlink carrier for the mobile terminal if the determined priority of the downlink carrier is higher than the determined priority of the uplink carrier.

4. The method according to claim 1, further comprising:
scheduling the uplink carrier and the downlink carrier for the mobile terminal based on a non-anti-interference scheduling strategy after judging that the mobile terminal supports simultaneous information transmissions in opposite directions on the uplink carrier and the downlink carrier.

5. A device for carrier scheduling, comprising:
a determining unit (501), adapted to determine an uplink carrier and a downlink carrier for a mobile terminal, wherein the uplink carrier is adapted to transmit uplink information and the downlink carrier is adapted to transmit downlink information;
**characterized in that** the device further comprises:
a scheduling unit (502), adapted to schedule the uplink carrier and/or the downlink carrier for the mobile terminal in different time domains based on a predetermined anti-interference scheduling strategy after judging that the mobile terminal does not support simultaneous information transmissions in opposite directions on the uplink carrier and the downlink carrier according to capability information about whether the mobile terminal supports simultaneous information transmissions in opposite directions on at least two frequency bands included in each frequency band combination for non-contiguous carrier aggregation supported by the mobile terminal itself.

6. The device according to claim 5, wherein
the scheduling unit comprises:
a receiving sub-unit, adapted to receive, the capability information about whether the mobile terminal supports simultaneous information transmissions in opposite directions on frequency bands of the uplink carrier and the downlink carrier, which is reported by the mobile terminal; and
a first judging sub-unit, adapted to judge that the mobile terminal does not support simultaneous information transmissions in opposite directions on the uplink carrier and the downlink carrier if it is confirmed that the mobile terminal does not support simultaneous information transmissions in opposite directions on the frequency bands of the uplink carrier and the downlink carrier based on the capability information of the mobile terminal received by the receiving sub-unit;
or,
the scheduling unit comprises:
a reading sub-unit, adapted to read, from prestored information, the capability information about whether the mobile terminal supports simultaneous information transmissions in opposite directions on frequency bands of the uplink carrier and the downlink carrier; and
a second judging sub-unit, adapted to judge that the mobile terminal does not support simultaneous information transmissions in opposite directions on the uplink carrier and the downlink carrier if it is confirmed that the mobile terminal does not support simultaneous information transmissions in opposite directions on the frequency bands of the uplink carrier and the downlink carrier based on the capability information of the mobile terminal read by the reading sub-unit.

7. The device according to claim 5, wherein
the scheduling unit comprises:
a first determining sub-unit, adapted to determine priorities of the uplink carrier and downlink carrier based on uplink information to be transmitted on the uplink carrier and downlink information to be transmitted on the downlink carrier; and
a first scheduling sub-unit, adapted to schedule the uplink carrier and the downlink carrier for the mobile terminal in different time domains based on the determined priorities of the uplink carrier and downlink carrier;
or,
the scheduling unit comprises:
a dividing sub-unit, adapted to divide a current scheduling cycle into two phases; and
a second scheduling sub-unit, adapted to schedule the uplink carrier for the mobile terminal in one phase on the two phases; and to schedule the downlink carrier for the mobile terminal in the other phase of the two phases;
or,
the scheduling unit comprises:
a second determining sub-unit, adapted to determine priorities of the uplink carrier and downlink carrier based on uplink information to be transmitted on the uplink carrier and downlink information to be transmitted on the downlink carrier;
a third scheduling sub-unit, adapted to schedule the uplink carrier for the mobile terminal if the determined priority of the uplink carrier is higher than the determined priority of the downlink carrier; and
a fourth scheduling sub-unit, adapted to schedule the downlink carrier for the mobile terminal if the determined priority of the downlink carrier is higher than the determined priority of the uplink carrier.

8. The device according to claim 5, wherein the scheduling unit is further adapted to schedule the uplink carrier and the downlink carrier for the mobile terminal based on a non-anti-interference scheduling strategy after judging that the mobile terminal supports simultaneous information transmissions in opposite directions on the uplink carrier and the downlink carrier.

9. A base station, comprising the device according to any one of claims 5 to 8.

10. A method for reporting capability information, **characterized in** comprising:
reporting (602), by a mobile terminal, capability information about whether the mobile terminal supports simultaneous information transmissions in opposite directions on at least two frequency bands included in each frequency band combination for non-contiguous carrier aggregation supported by the mobile terminal itself, to a base station, so that the base station schedules an uplink carrier and/or a downlink carrier for the mobile terminal in different time domains based on a predetermined anti-interference scheduling strategy after determining the uplink carrier and the downlink carrier for the mobile terminal and after judging that the mobile terminal does not support simultaneous information transmissions in opposite directions on the uplink carrier and the downlink carrier according to the capability information, wherein the uplink carrier is adapted to transmit uplink information and the down link carrier is adapted to transmit downlink information.

11. The method for reporting capability information according to claim 10, wherein the capability information about whether the mobile terminal supports simultaneous information transmissions in opposite directions on at least two frequency bands included in each frequency band combination for carrier aggregation supported by the mobile terminal itself, is carried in UE-EUTRA-Capability Information Element.

12. The method for reporting capability information according to claim 10, wherein the method further comprises,
receiving identifier information of the uplink carrier and the downlink carrier to be scheduled for the mobile terminal which is sent by the base station; and
reporting, to the base station, the capability information about whether the mobile terminal supports simultaneous information transmissions in opposite directions on frequency bands of the corresponding uplink carrier and downlink carrier based on the received identifier information of the uplink carrier and downlink carrier.

13. A device for reporting capability information, **characterized in** comprising:
a reporting unit (702), adapted to report, to a base station, the capability information about whether the device supports simultaneous information transmissions in opposite directions on at least two frequency bands included in each frequency band combination for non-contiguous carrier aggregation supported by the device, for the base station to schedule an uplink carrier and/or a downlink carrier for the device in different time domains based on a predetermined anti-interference scheduling strategy after determining the uplink carrier and the downlink carrier for the device and after judging that the device does not support simultaneous information transmissions in opposite directions on the uplink carrier and the downlink carrier according to the capability information, wherein the uplink carrier is adapted to transmit uplink information and the down link carrier is adapted to transmit downlink information.

14. The device for reporting capability information according to claim 13, further comprising a receiving unit, wherein
the receiving unit is adapted to receive identifier information of the uplink carrier and downlink carrier to be scheduled for the device which is sent by a current cell base station; and
the reporting unit is further adapted to report, to the base station, the capability information about whether the device supports simultaneous information transmissions in opposite directions on frequency bands of the corresponding uplink carrier and downlink carrier, based on the received identifier information of the uplink carrier and downlink carrier.

15. A mobile terminal, comprising the device for reporting capability information according to claim 13 or claim 14.

## Patentansprüche

1. Verfahren zur Trägerplanung, umfassend:
Bestimmen (201), durch eine Basisstation, eines Uplink-Trägers und eines Downlink-Trägers für ein mobiles Endgerät, wobei der Uplink-Träger angepasst ist zum Übertragen von Uplink-Informationen und der Downlink-Träger angepasst ist zum Übertragen von Downlink-Informationen;
**dadurch gekennzeichnet, dass** das Verfahren ferner umfasst:
Planen (S202), durch die Basisstation, des Uplink-Trägers und/oder des Downlink-Trägers für das mobile Endgerät in unterschiedlichen Zeitbereichen basierend auf einer vorbestimmten Anti-Interferenz-Planungsstrategie, nachdem beurteilt wurde, dass das mobile Endgerät keine gleichzeitigen Informationsübertragungen in entgegengesetzte Richtungen auf dem Uplink-Träger und dem Downlink-Träger unterstützt, gemäß Fähigkeitsinformationen darüber, ob das mobile Endgerät gleichzeitige Informationsübertragungen in entgegengesetzte Richtungen auf mindestens zwei Frequenzbändern unterstützt, die in jeder Frequenzbandkombination für die Aggregation nicht zusammenhängender Träger enthalten sind, die von dem mobilen Endgerät selbst unterstützt wird.

2. Verfahren nach Anspruch 1, wobei das Beurteilen, dass das mobile Endgerät keine gleichzeitigen Informationsübertragungen in entgegengesetzte Richtungen auf dem Uplink-Träger und dem Downlink-Träger unterstützt, umfasst:
Empfangen der Fähigkeitsinformationen darüber, ob das mobile Endgerät gleichzeitige Informationsübertragungen in entgegengesetzte Richtungen auf Frequenzbändern des Uplink-Trägers und des Downlink-Trägers unterstützt, welche durch das mobile Endgerät berichtet werden, und Beurteilen, dass das mobile Endgerät keine gleichzeitigen Informationsübertragungen in entgegengesetzte Richtungen auf dem Uplink-Träger und dem Downlink-Träger unterstützt, wenn bestätigt wird, dass das mobile Endgerät keine gleichzeitigen Informationsübertragungen in entgegengesetzte Richtungen auf den Frequenzbändern des Uplink-Trägers und des Downlink-Trägers unterstützt, basierend auf den empfangenen Fähigkeitsinformationen des mobilen Endgeräts; oder
Auslesen, durch die Basisstation, aus in der Basisstation selbst vorgespeicherten Informationen, der Fähigkeitsinformationen darüber, ob das mobile Endgerät gleichzeitige Informationsübertragungen in entgegengesetzte Richtungen auf Frequenzbändern des Uplink-Trägers und des Downlink-Trägers unterstützt, und Beurteilen, dass das mobile Endgerät keine gleichzeitigen Informationsübertragungen in entgegengesetzte Richtungen auf dem Uplink-Träger und dem Downlink-Träger unterstützt, wenn bestätigt wird, dass das mobile Endgerät keine gleichzeitigen Informationsübertragungen in entgegengesetzte Richtungen auf den Frequenzbändern des Uplink-Trägers und des Downlink-Trägers unterstützt, basierend auf den gelesenen Fähigkeitsinformationen des mobilen Endgeräts.

3. Verfahren nach Anspruch 1, wobei das Planen, durch die Basisstation, des Uplink-Trägers und des Downlink-Trägers für das mobile Endgerät basierend auf der vorbestimmten Anti-Interferenz-Planungsstrategie umfasst:
Bestimmen, durch die Basisstation, von Prioritäten des Uplink-Trägers und des Downlink-Trägers basierend auf Uplink-Informationen, die auf dem Uplink-Träger zu übertragen sind, und Downlink-Informationen, die auf dem Downlink-Träger zu übertragen sind; und
Planen des Uplink-Trägers und des Downlink-Trägers für das mobile Endgerät in den unterschiedlichen Zeitbereichen basierend auf den bestimmten Prioritäten des Uplink-Trägers und des Downlink-Trägers;
oder,
das Planen, durch eine Basisstation, des Uplink-Trägers und des Downlink-Trägers für das mobile Endgerät basierend auf der vorbestimmten Anti-Interferenz-Planungsstrategie umfasst:
Unterteilen eines aktuellen Planungszyklus in zwei Phasen; und
Planen des Uplink-Trägers für das mobile Endgerät in einer Phase der beiden Phasen; und Planen des Downlink-Trägers für das mobile Endgerät in der anderen Phase der beiden Phasen;
oder,
das Planen, durch die Basisstation, des Uplink-Trägers oder des Downlink-Trägers für das mobile Endgerät basierend auf der vorbestimmten Anti-Interferenz-Planungsstrategie umfasst:
Bestimmen, durch die Basisstation, von Prioritäten des Uplink-Trägers und des Downlink-Trägers basierend auf Uplink-Informationen, die auf dem Uplink-Träger zu übertragen sind, und Downlink-Informationen, die auf dem Downlink-Träger zu übertragen sind;
Planen, durch die Basisstation, des Uplink-Trägers für das mobile Endgerät, wenn die bestimmte Priorität des Uplink-Trägers höher ist als die bestimmte Priorität des Downlink-Trägers; und
Planen, durch die Basisstation, des Downlink-Trägers für das mobile Endgerät, wenn die festgelegte Priorität des Downlink-Trägers höher ist als die festgelegte Priorität des Uplink-Trägers.

4. Verfahren nach Anspruch 1, ferner umfassend:
Planen des Uplink-Trägers und des Downlink-Trägers für das mobile Endgerät basierend auf einer Nicht-Anti-Interferenz-Planungsstrategie, nachdem beurteilt wurde, dass das mobile Endgerät gleichzeitige Informationsübertragungen in entgegengesetzte Richtungen auf dem Uplink-Träger und dem Downlink-Träger unterstützt.

5. Vorrichtung zur Trägerplanung, umfassend:
eine Bestimmungseinheit (501), die angepasst ist zum Bestimmen eines Uplink-Trägers und eines Downlink-Trägers für ein mobiles Endgerät, wobei der Uplink-Träger angepasst ist zum Übertragen von Uplink-Informationen und der Downlink-Träger angepasst ist zum Übertragen von Downlink-Informationen;
**dadurch gekennzeichnet, dass** die Vorrichtung ferner umfasst:
eine Planungseinheit (502), die angepasst ist zum Planen des Uplink-Trägers und/oder des Downlink-Trägers für das mobile Endgerät in unterschiedlichen Zeitbereichen basierend auf einer vorbestimmten Anti-Interferenz-Planungsstrategie, nachdem beurteilt wurde, dass das mobile Endgerät keine gleichzeitigen Informationsübertragungen in entgegengesetzte Richtungen auf dem Uplink-Träger und dem Downlink-Träger unterstützt, gemäß Fähigkeitsinformationen darüber, ob das mobile Endgerät gleichzeitige Informationsübertragungen in entgegengesetzte Richtungen auf mindestens zwei Frequenzbändern unterstützt, die in jeder Frequenzbandkombination für die Aggregation nicht zusammenhängender Träger enthalten sind, die von dem mobilen Endgerät selbst unterstützt wird.

6. Die Vorrichtung nach Anspruch 5, wobei
die Planungseinheit umfasst:
eine Empfangsuntereinheit, die angepasst ist zum Empfangen der Fähigkeitsinformationen darüber, ob das mobile Endgerät gleichzeitige Informationsübertragungen in entgegengesetzte Richtungen auf Frequenzbändern des Uplink-Trägers und des Downlink-Trägers unterstützt, welche durch das mobile Endgerät berichtet werden; und
eine erste Beurteilungsuntereinheit, die angepasst ist zum Beurteilen, dass das mobile Endgerät keine gleichzeitigen Informationsübertragungen in entgegengesetzte Richtungen auf dem Uplink-Träger und dem Downlink-Träger unterstützt, wenn bestätigt wird, dass das mobile Endgerät keine gleichzeitigen Informationsübertragungen in entgegengesetzte Richtungen auf den Frequenzbändern des Uplink-Trägers und des Downlink-Trägers unterstützt, basierend auf den durch die Empfangsuntereinheit empfangenen Fähigkeitsinformationen des mobilen Endgeräts;
oder,
die Planungseinheit umfasst:
eine Leseuntereinheit, die angepasst ist zum Auslesen, aus vorgespeicherten Informationen, der Fähigkeitsinformationen darüber, ob das mobile Endgerät gleichzeitige Informationsübertragungen in entgegengesetzten Richtungen auf Frequenzbändern des Uplink-Trägers und des Downlink-Trägers unterstützt; und
eine zweite Beurteilungsuntereinheit, die angepasst ist zum Beurteilen, dass das mobile Endgerät keine gleichzeitigen Informationsübertragungen in entgegengesetzte Richtungen auf dem Uplink-Träger und dem Downlink-Träger unterstützt, wenn bestätigt wird, dass das mobile Endgerät keine gleichzeitigen Informationsübertragungen in entgegengesetzte Richtungen auf den Frequenzbändern des Uplink-Trägers und des Downlink-Trägers unterstützt, basierend auf den durch die Leseuntereinheit gelesenen Fähigkeitsinformationen des mobilen Endgeräts.

7. Vorrichtung nach Anspruch 5, wobei
die Planungseinheit umfasst:
eine erste Bestimmungsuntereinheit, die angepasst ist zum Bestimmen von Prioritäten des Uplink-Trägers und des Downlink-Trägers basierend auf Uplink-Informationen, die auf dem Uplink-Träger zu übertragen sind, und Downlink-Informationen, die auf dem Downlink-Träger zu übertragen sind; und
eine erste Planungsuntereinheit, die angepasst ist zum Planen des Uplink-Trägers und des Downlink-Trägers für das mobile Endgerät in unterschiedlichen Zeitbereichen basierend auf den bestimmten Prioritäten des Uplink-Trägers und des Downlink-Trägers;
oder,
die Planungseinheit umfasst:
eine Teilungsuntereinheit, die angepasst ist zum Unterteilen eines aktuellen Planungszyklus in zwei Phasen; und
eine zweite Planungsuntereinheit, die angepasst ist zum Planen des Uplink-Trägers für das mobile Terminal in einer Phase der beiden Phasen; und zum Planen des Downlink-Trägers für das mobile Terminal in der anderen Phase der beiden Phasen;
oder,
die Planungseinheit umfasst:
eine zweite Bestimmungsuntereinheit, die angepasst ist zum Bestimmen von Prioritäten des Uplink-Trägers und des Downlink-Trägers basierend auf Uplink-Informationen, die auf dem Uplink-Träger zu übertragen sind, und Downlink-Informationen, die auf dem Downlink-Träger zu übertragen sind;
eine dritte Planungsuntereinheit, die angepasst ist zum Planen des Uplink-Trägers für das mobile Endgerät, wenn die bestimmte Priorität des Uplink-Trägers höher ist als die bestimmte Priorität des Downlink-Trägers; und
eine vierte Planungsuntereinheit, die angepasst ist zum Planen des Downlink-Trägers für das mobile Endgerät, wenn die bestimmte Priorität des Downlink-Trägers höher ist als die bestimmte Priorität des Uplink-Trägers.

8. Vorrichtung nach Anspruch 5, wobei die Planungseinheit ferner angepasst ist zum Planen des Uplink-Trägers und des Downlink-Trägers für das mobile Endgerät basierend auf einer Nicht-Anti-Interferenz-Planungsstrategie, nachdem beurteilt wurde, dass das mobile Endgerät gleichzeitige Informationsübertragungen in entgegengesetzte Richtungen auf dem Uplink-Träger und dem Downlink-Träger unterstützt.

9. Basisstation, umfassend die Vorrichtung nach einem der Ansprüche 5 bis 8.

10. Verfahren zum Berichten von Fähigkeitsinformationen, **dadurch gekennzeichnet, dass** es umfasst:
Berichten (602), durch ein mobiles Endgerät, von Fähigkeitsinformationen darüber, ob das mobile Endgerät gleichzeitige Informationsübertragungen in entgegengesetzte Richtungen auf mindestens zwei Frequenzbändern unterstützt, die in jeder Frequenzbandkombination für die Aggregation nicht zusammenhängender Träger enthalten sind, die von dem mobilen Endgerät selbst unterstützt wird, an eine Basisstation, so dass die Basisstation einen Uplink-Träger und/oder einen Downlink-Träger für das mobile Endgerät in unterschiedlichen Zeitbereichen basierend auf einer vorbestimmten Anti-Interferenz-Planungsstrategie plant, nach dem Bestimmen des Uplink-Trägers und des Downlink-Trägers für das mobile Endgerät und nach dem Beurteilen, dass das mobile Endgerät keine gleichzeitigen Informationsübertragungen in entgegengesetzte Richtungen auf dem Uplink-Träger und dem Downlink-Träger unterstützt, gemäß den Fähigkeitsinformationen, wobei der Uplink-Träger angepasst ist zum Übertragen von Uplink-Informationen und der Downlink-Träger angepasst ist zum Übertragen von Downlink-Informationen.

11. Verfahren zum Berichten von Fähigkeitsinformationen nach Anspruch 10, wobei die Fähigkeitsinformationen darüber, ob das mobile Endgerät gleichzeitige Informationsübertragungen in entgegengesetzte Richtungen auf mindestens zwei Frequenzbändern unterstützt, die in jeder Frequenzbandkombination zur Aggregation von Trägern enthalten sind, die von dem mobilen Endgerät selbst unterstützt wird, im UE-EUTRA-Fähigkeitsinformationselement übertragen werden.

12. Verfahren zum Berichten von Fähigkeitsinformationen nach Anspruch 10, wobei das Verfahren ferner umfasst,
Empfangen von Identifikationsinformationen des Uplink-Trägers und des Downlink-Trägers, die für das mobile Endgerät zu planen sind, welche durch die Basisstation gesendet werden; und
Berichten, an die Basisstation, der Fähigkeitsinformationen, ob das mobile Endgerät gleichzeitige Informationsübertragungen in entgegengesetzten Richtungen auf Frequenzbändern des entsprechenden Uplink-Trägers und Downlink-Trägers unterstützt, basierend auf den empfangenen Identifikationsinformationen des Uplink-Trägers und des Downlink-Trägers.

13. Vorrichtung zum Berichten von Fähigkeitsinformationen, **dadurch gekennzeichnet, dass** sie umfasst:
eine Berichtseinheit (702), die angepasst ist zum Berichten, an eine Basisstation, der Fähigkeitsinformationen darüber, ob die Vorrichtung gleichzeitige Informationsübertragungen in entgegengesetzte Richtungen auf mindestens zwei Frequenzbändern unterstützt, die in jeder Frequenzbandkombination für die Aggregation nicht zusammenhängender Träger enthalten sind, die von der Vorrichtung unterstützt wird, so dass die Basisstation einen Uplink-Träger und/oder einen Downlink-Träger für die Vorrichtung in unterschiedlichen Zeitbereichen basierend auf einer vordefinierten Anti-Interferenz-Planungsstrategie plant, nach dem Bestimmen des Uplink-Trägers und des Downlink-Trägers für die Vorrichtung und nach dem Beurteilen, dass die Vorrichtung keine gleichzeitigen Informationsübertragungen in entgegengesetzte Richtungen auf dem Uplink-Träger und dem Downlink-Träger unterstützt, gemäß den Fähigkeitsinformationen, wobei der Uplink-Träger angepasst ist zum Übertragen von Uplink-Informationen und der Downlink-Träger angepasst ist zum Übertragen von Downlink-Informationen.

14. Vorrichtung zum Berichten von Fähigkeitsinformationen nach Anspruch 13, ferner umfassend eine Empfangseinheit, wobei
die Empfangseinheit angepasst ist zum Empfangen von Identifikationsinformationen des Uplink-Trägers und des Downlink-Trägers, die für die Vorrichtung zu planen sind, welche durch eine Basisstation der aktuellen Zellen gesendet werden; und
die Berichtseinheit ferner angepasst ist zum Berichten, an die Basisstation, der Fähigkeitsinformationen darüber, ob die Vorrichtung gleichzeitige Informationsübertragungen in entgegengesetzten Richtungen auf Frequenzbändern des entsprechenden Uplink-Trägers und Downlink-Trägers unterstützt, basierend auf den empfangenen Identifikationsinformationen des Uplink-Trägers und des Downlink-Trägers.

15. Mobiles Endgerät, umfassend die Vorrichtung zum Berichten von Fähigkeitsinformationen nach Anspruch 13 oder Anspruch 14.

## Revendications

1. Procédé de planification de porteuse, comprenant:
déterminer (201), par une station de base, une porteuse de liaison montante et une porteuse de liaison descendante pour un terminal mobile, dans lequel la porteuse de liaison montante est adaptée pour transmettre des informations de liaison montante et la porteuse de liaison descendante est adaptée pour transmettre des informations de liaison descendante;
**caractérisé par le fait que** le procédé comprend en outre:
planifier (S202), par la station de base, la porteuse de liaison montante et/ou la porteuse de liaison descendante pour le terminal mobile dans des domaines temporels différents sur la base d'une stratégie de planification anti-interférence prédéterminée après avoir jugé que le terminal mobile ne supporte pas de transmissions simultanées d'informations dans des directions opposées sur la porteuse de liaison montante et la porteuse de liaison descendante, selon des informations de capacité indiquant si le terminal mobile supporte des transmissions simultanées d'informations dans des directions opposées sur au moins deux bandes de fréquences incluses dans chaque combinaison de bandes de fréquences pour l'agrégation de porteuses non contiguës supportée par le terminal mobile lui-même.

2. Procédé selon la revendication 1, dans lequel l'action de juger que le terminai mobile ne supporte pas de transmissions simultanées d'informations dans des directions opposées sur la porteuse de liaison montante et la porteuse de liaison descendante comprend:
recevoir les informations de capacité indiquant si le terminal mobile supporte des transmissions simultanées d'informations dans des directions opposées sur des bandes de fréquences de la porteuse de liaison montante et de la porteuse de liaison descendante rapportées par le terminal mobile, et juger que le terminal mobile ne supporte pas de transmissions simultanées d'informations dans des directions opposées sur la porteuse de liaison montante et la porteuse de liaison descendante s'il est confirmé que le terminal mobile ne supporte pas de transmissions simultanées d'information dans des directions opposées sur les bandes de fréquences de la porteuse de liaison montante et de la porteuse de liaison descendante, sur la base des informations de capacité reçues du terminal mobile; ou
lire, par la station de base, à partir d'informations préstockées dans la station de base elle-même, les informations de capacité indiquant si le terminal mobile supporte des transmissions simultanées d'informations dans des directions opposées sur des bandes de fréquences de la porteuse de liaison montante et de la porteuse de liaison descendante, et juger que terminal mobile ne supporte pas de transmissions simultanées d'informations dans des directions opposées sur la porteuse de liaison montante et la porteuse de liaison descendante s'il est confirmé que le terminal mobile ne supporte pas de transmissions simultanées d'informations dans des directions opposées sur les bandes de fréquences de la porteuse de liaison montante et de la porteuse de liaison descendante, sur la base des informations de capacité lues du terminal mobile.

3. Procédé selon la revendication 1, dans lequel la planification, par la station de base, de la porteuse de liaison montante et de la porteuse de liaison descendante pour le terminal mobile, sur la base de la stratégie de planification anti-interférence prédéterminée, comprend:
déterminer, par la station de base, des priorités de la porteuse de liaison montante et de la porteuse de liaison descendante sur la base d'informations de liaison montante à transmettre sur la porteuse de liaison montante et d'informations de liaison descendante à transmettre sur la porteuse de liaison descendante; et
planifier la porteuse de liaison montante et la porteuse de liaison descendante pour le terminal mobile dans les domaines temporels différents sur la base des priorités déterminées de la porteuse de liaison montante et de la porteuse de liaison descendante;
ou,
la planification, par une station de base, de la porteuse de liaison montante et de la porteuse de liaison descendante pour le terminal mobile, sur la base de la stratégie de planification anti-interférence prédéterminée, comprend:
diviser un cycle courant de planification en deux phases; et
planifier la porteuse de liaison montante pour le terminal mobile dans une phase des deux phases; et planifier la porteuse de liaison descendante pour le terminal mobile dans l'autre phase des deux phases;
ou,
la planification, par la station de base, de la porteuse de liaison montante ou de la porteuse de liaison descendante pour le terminal mobile, sur la base de la stratégie de planification anti-interférence prédéterminée, comprend:
déterminer, par la station de base, des priorités de la porteuse de liaison montante et de la porteuse de liaison descendante sur la base d'informations de liaison montante à transmettre sur la porteuse de liaison montante et d'informations de liaison descendante à transmettre sur la porteuse de liaison descendante;
planifier, par la station de base, la porteuse de liaison montante pour le terminal mobile, si la priorité déterminée de la porteuse de liaison montante est supérieure à la priorité déterminée de la porteuse de liaison descendante; et
planifier, par la station de base, la porteuse de liaison descendante pour le terminal mobile, si la priorité déterminée de la porteuse de liaison descendante est supérieure à la priorité déterminée de la porteuse de liaison montante.

4. Procédé selon la revendication 1, comprenant en outre:
planifier la porteuse de liaison montante et la porteuse de liaison descendante pour le terminal mobile sur la base d'une stratégie de planification non anti-interférence après avoir jugé que le terminal mobile supporte des transmissions simultanées d'informations dans des directions opposées sur la porteuse de liaison montante et la porteuse de liaison descendante.

5. Dispositif de planification de porteuse, comprenant:
une unité de détermination (501) adaptée pour déterminer une porteuse de liaison montante et une porteuse de liaison descendante pour un terminal mobile, dans lequel la porteuse de liaison montante est adaptée pour transmettre des informations de liaison montante et la porteuse de liaison descendante est adaptée pour transmettre des informations de liaison descendante;
**caractérisé par le fait que** le dispositif comprend en outre:
une unité de planification (502) adaptée pour planifier la porteuse de liaison montante et/ou la porteuse de liaison descendante pour le terminal mobile dans des domaines temporels différents sur la base d'une stratégie de planification anti-interférence prédéterminée après avoir jugé que le terminal mobile ne supporte pas de transmissions simultanées d'informations dans des directions opposées sur la porteuse de liaison montante et la porteuse de liaison descendante, selon des informations de capacité indiquant si le terminal mobile supporte des transmissions simultanées d'informations dans des directions opposées sur au moins deux bandes de fréquences incluses dans chaque combinaison de bandes de fréquences pour l'agrégation de porteuses non contiguës supportée par le terminal mobile lui-même.

6. Dispositif selon la revendication 5, dans lequel
l'unité de planification comprend:
une sous-unité de réception adaptée pour recevoir les informations de capacité indiquant si le terminal mobile supporte des transmissions simultanées d'informations dans des directions opposées sur des bandes de fréquences de la porteuse de liaison montante et de la porteuse de liaison descendante, qui sont rapportées par le terminal mobile; et
une première sous-unité de jugement adaptée pour juger que le terminal mobile ne supporte pas de transmissions simultanées d'informations dans des directions opposées sur la porteuse de liaison montante et la porteuse de liaison descendante s'il est confirmé que le terminal mobile ne supporte pas de transmissions simultanées d'informations dans des directions opposées sur les bandes de fréquences de la porteuse de liaison montante et de la porteuse de liaison descendante, sur la base des informations de capacité du terminal mobile reçues par ladite sous-unité de réception;
ou,
l'unité de planification comprend:
une sous-unité de lecture adaptée pour lire, à partir d'informations préstockées, les informations de capacité indiquant si le terminal mobile supporte des transmissions simultanées d'informations dans des directions opposées sur des bandes de fréquences de la porteuse de liaison montante et de la porteuse de liaison descendante; et
une deuxième sous-unité de jugement adaptée pour juger que terminal mobile ne supporte pas de transmissions simultanées d'informations dans des directions opposées sur la porteuse de liaison montante et la porteuse de liaison descendante s'il est confirmé que le terminal mobile ne supporte pas de transmissions simultanées d'informations dans des directions opposées sur les bandes de fréquences de la porteuse de liaison montante et de la porteuse de liaison descendante, sur la base des informations de capacité du terminal mobile lues par la sous-unité de lecture.

7. Dispositif selon la revendication 5, dans lequel
l'unité de planification comprend:
une première sous-unité de détermination adaptée pour déterminer des priorités de la porteuse de liaison montante et de la porteuse de liaison descendante sur la base d'informations de liaison montante à transmettre sur la porteuse de liaison montante et d'informations de liaison descendante à transmettre sur la porteuse de liaison descendante; et
une première sous-unité de planification adaptée pour planifier la porteuse de liaison montante et la porteuse de liaison descendante pour le terminal mobile dans des domaines temporels différents sur la base des priorités déterminées de la porteuse de liaison montante et de la porteuse de liaison descendante;
ou,
l'unité de planification comprend:
une sous-unité de division adaptée pour diviser un cycle courant de planification en deux phases; et
une deuxième sous-unité de planification adaptée pour planifier la porteuse de liaison montante pour le terminal mobile dans une phase des deux phases; et pour planifier la porteuse de liaison descendante pour le terminal mobile dans l'autre phase des deux phases;
ou,
l'unité de planification comprend:
une deuxième sous-unité de détermination adaptée pour déterminer des priorités de la porteuse de liaison montante et de la porteuse de liaison descendante sur la base d'informations de liaison montante à transmettre sur la porteuse de liaison montante et d'informations de liaison descendante à transmettre sur la porteuse de liaison descendante;
une troisième sous-unité de planification adaptée pour planifier la porteuse de liaison montante pour le terminal mobile, si la priorité déterminée de la porteuse de liaison montante est supérieure à la priorité déterminée de la porteuse de liaison descendante; et
une quatrième sous-unité de planification adaptée pour planifier la porteuse de liaison descendante pour le terminal mobile, si la priorité déterminée de la porteuse de liaison descendante est supérieure à la priorité déterminée de la porteuse de liaison montante.

8. Dispositif selon la revendication 5, dans lequel l'unité de planification est en outre adaptée pour planifier la porteuse de liaison montante et la porteuse de liaison descendante pour le terminal mobile sur la base d'une stratégie de planification non anti-interférence après avoir jugé que le terminal mobile supporte des transmissions simultanées d'informations dans des directions opposées sur la porteuse de liaison montante et la porteuse de liaison descendante.

9. Station de base comprenant le dispositif selon l'une quelconque des revendications 5 à 8.

10. Procédé pour rapporter des informations de capacité, **caractérisé par le fait qu'**il comprend:
rendre compte (602), par un terminal mobile, à une station de base, d'informations de capacité indiquant si le terminal mobile supporte des transmissions simultanées d'informations dans des directions opposées sur au moins deux bandes de fréquences incluses dans chaque combinaison de bandes de fréquences pour l'agrégation de porteuses non contiguës supportée par le terminai mobile lui-même, de sorte que la station de base planifie une porteuse de liaison montante et/ou une porteuse de liaison descendante pour le terminal mobile dans des domaines temporels différents, sur la base d'une stratégie de planification anti-interférence prédéterminée après avoir déterminé la porteuse de liaison montante et la porteuse de liaison descendante pour le terminal mobile, et après avoir jugé que le terminal mobile ne supporte pas de transmissions simultanées d'informations dans des directions opposées sur la porteuse de liaison montante et la porteuse de liaison descendante selon les informations de capacité, la porteuse de liaison montante étant adaptée pour transmettre des informations de liaison montante et la porteuse de liaison descendante étant adaptée pour transmettre des informations de liaison descendante.

11. Procédé pour rapporter des informations de capacité selon la revendication 10, dans lequel les informations de capacité indiquant si le terminal mobile supporte des transmissions simultanées d'informations dans des directions opposées sur au moins deux bandes de fréquences incluses dans chaque combinaison de bandes de fréquences pour l'agrégation de porteuses supportée par le terminal mobile lui-même sont transmises dans l'élément d'information de capacité UE-EUTRA.

12. Procédé pour rapporter des informations de capacité selon la revendication 10, dans lequel le procédé comprend en outre,
recevoir des informations d'identifiant de la porteuse de liaison montante et de la porteuse de liaison descendante à planifier pour le terminal mobile, qui sont envoyées par la station de base; et
rendre compte, à la station de base, des informations de capacité indiquant si le terminal mobile supporte des transmissions simultanées d'informations dans des directions opposées sur des bandes de fréquences de la porteuse de liaison montante et de la porteuse de liaison descendante correspondantes, sur la base des informations d'identifiant reçues de la porteuse de liaison montante et de la porteuse de liaison descendante.

13. Dispositif pour rapporter des informations de capacité, **caractérisé par le fait qu'**il comprend:
une unité de rapport (702) adaptée pour rendre compte, à une station de base, des informations de capacité indiquant si le dispositif supporte des transmissions simultanées d'informations dans des directions opposées sur au moins deux bandes de fréquences incluses dans chaque combinaison de bandes de fréquences pour l'agrégation de porteuses non contiguës supportée par le dispositif, de sorte que la station de base planifie une porteuse de liaison montante et/ou une porteuse de liaison descendante pour le dispositif dans des domaines temporels différents, sur la base d'une stratégie de planification anti-interférence prédéterminée, après avoir déterminé la porteuse de liaison montante et la porteuse de liaison descendante pour le dispositif, et après avoir jugé que le dispositif ne supporte pas de transmissions simultanées d'informations dans des directions opposées sur la porteuse de liaison montante et la porteuse de liaison descendante, selon les informations de capacité, la porteuse de liaison montante étant adaptée pour transmettre des informations de liaison montante et la porteuse de liaison descendante étant adaptée pour transmettre des informations de liaison descendante.

14. Dispositif pour rapporter des informations de capacité selon la revendication 13, comprenant en outre une unité de réception, dans lequel
l'unité de réception est adaptée pour recevoir des informations d'identifiant de la porteuse de liaison montante et de la porteuse de liaison descendante à planifier pour le dispositif, qui sont envoyées par une station de base de cellules actuelles; et
l'unité de rapport est adaptée en outre pour rendre compte, à la station de base, des informations de capacité indiquant si le dispositif supporte des transmissions simultanées d'informations dans des directions opposées sur des bandes de fréquences de la porteuse de liaison montante et de la porteuse de liaison descendante correspondantes, sur la base des informations d'identifiant reçues de la porteuse de liaison montante et de la porteuse de liaison descendante.

15. Terminal mobile comprenant le dispositif pour rapporter des informations de capacité selon la revendication 13 ou la revendication 14.
